# EUROPEAN PATENT APPLICATION

(11) **EP 3 637 813 A1**
(43) Date of publication of application: **15.04.2020**
(21) Application number: 18199091.2
(22) Date of filing: 08.10.2018
(51) Int. Cl.: H04W 12/00

(54) **A CLOUD PLATFORM FOR SECURE OPERATION OF SELF-HOSTED APPLICATIONS**

(71) Applicant: Siemens Aktiengesellschaft, 80333 München (DE)
(72) Inventor: Baierlein, Thomas, 90491 Nürnberg (DE); Boche, Maik, 90522 Oberasbach (DE); Burger, Stefan, 81241 München (DE); Ebert, Michael, 96450 Coburg (DE); Hecker, Ingo, 91456 Diespeck (DE); Wahl, Alexander, 90530 Wendelstein (DE)

(57) **Abstract**

A cloud platform having an internal infrastructure including a gateway configured as a reverse proxy to generate in response to a request (REQ) received from an application of a client device connected to said cloud platform at least one target request transmitted to a target resource URL of at least one target resource, wherein the target resource URL is derived automatically by the gateway according to a configuration of the gateway.

## Description

The invention relates to a cloud platform providing integration and secure operation of self-hosted applications in an industrial domain. A cloud platform can store operational data and can make them accessible through software applications to allow industrial customers to make decisions based on valuable factual information. A cloud platform can be used in any technical domain, in particular automation systems.

The focus of conventional cloud platforms is a provision of a holistic solution including managed cloud resources for creating software applications, in particular self-hosted applications. However, conventional platforms do not address developers and solution providers that have already existing systems (e.g. other existing cloud platform of their own) and products that they want to be integrated into the cloud platform. Particularly, in case of larger existing systems, the porting of those solutions to included and managed resources like PaaS (Cloud Foundry) is not feasible due to missing functionality like different container formats as well as a limited choice of technology (e.g. function as a service or Cassandra). This results in a high effort for porting existing systems or applications into a conventional cloud platform if possible at all from a technical perspective.

To address this problem, some customers have created a proxy-based workaround that routes traffic from the cloud platform to external (self-hosted) applications and that passes the required authorization information. However, this conventional approach is error-prone and does bypass the platform internal security guidelines provided by an identity and access management unit.

Accordingly, it is an object of the present invention to provide a cloud platform and a method which enable the integration of self-hosted applications and their secure operation within the cloud platform.

This object is achieved according to a first aspect of the present invention by a cloud platform comprising the features of claim 1.

The invention provides according to the first aspect a cloud platform having an internal infrastructure including a gateway configured as a reverse proxy to generate in response to a request received from an application of a client device connected to the cloud platform at least one target request transmitted to a target resource URL of at least one target resource,
wherein the target resource URL is derived automatically by the gateway of the cloud platform according to a configuration of the gateway.

In a possible embodiment of the cloud platform according to the first aspect of the present invention, wherein an operation performance of the target resource addressed by the derived target resource URL is monitored during access of the target resource by the application to detect automatically vulnerabilities and/or anomalies in a data access behaviour of the application.

A key technical feature that enables the integration of self-hosted applications that can run on target infrastructure is the support of arbitrary URLs within the application configuration in the cloud platform.

In a possible embodiment of the cloud platform according to the first aspect of the present invention, the at least one target resource addressed by the derived target resource URL comprises an internal target resource forming part of the internal infrastructure of the cloud platform.

In a still further possible embodiment of the cloud platform according to the first aspect of the present invention, the at least one target resource addressed by the derived target resource URL comprises an external target resource not forming part of the internal infrastructure of the cloud platform.

In a possible embodiment of the cloud platform according to the first aspect of the present invention, the target resource URL of a target resource comprises a network address of the target resource.

In a further possible embodiment of the cloud platform according to the first aspect of the present invention, the target resource URL comprises a DNS name of the target resource.

In a further possible embodiment of the cloud platform according to the first aspect of the present invention, the gateway of the cloud platform comprises a security check unit adapted to perform a security check based on a source URL of the requesting client device and/or a security check based on the derived target resource URLs of the target resources.

In a still further possible embodiment of the cloud platform according to the first aspect of the present invention, the gateway of the cloud platform comprises a monitoring unit adapted to monitor the operation performance of each target resource addressed by a derived target resource URL to detect changes within the internal and/or external infrastructure of the cloud platform.

In a still further possible embodiment of the cloud platform according to the first aspect of the present invention, a trained neural network of the cloud platform is adapted to detect vulnerabilities and/or anomalies during data access of the target resources by an application.

In a further possible embodiment of the cloud platform according to the first aspect of the present invention, the cloud platform comprises an identity and access management unit which is adapted to derive access rights to target resources from the received request of the application.

In a further possible embodiment of the cloud platform according to the first aspect of the present invention, the target resources comprise software resources, in particular backend services, websites and files, and/or hardware resources, in particular processing resources and/or storage resources.

In a still further possible embodiment of the cloud platform according to the first aspect of the present invention, the configuration stored in a secure configuration storage of the gateway comprises a mapping between self-hosted applications of requesting client devices and one or more target resources.

In a still further possible embodiment of the cloud platform according to the first aspect of the present invention, a self-hosted application of the client device is automatically tested in response to a request using test data provided by an internal and/or by an external target resource.

In a still further possible embodiment of the cloud platform according to the first aspect of the present invention, the successfully tested application is stored along with application metadata in an application repository of the cloud platform for use by multiple end customers of the cloud platform.

In a further possible embodiment of the cloud platform according to the first aspect of the present invention, if during access of the target resources addressed by the derived target resource URLs derived by the gateway of the platform from a name or from other application metadata of the respective application a vulnerability and/or an anomaly in the current operation behaviour is detected by the monitoring unit of the gateway, a warning is issued and/or an access of the application to its associated target resources is terminated automatically by the gateway.

The invention provides according to a further aspect a method for integration and secure operation of self-hosted applications of client devices by use of an a cloud platform comprising the steps of:
deriving by a gateway of the cloud platform in response to a request received from an application of a client device connected with the cloud platform one or more target resource URLs of target resources according to a configuration of the gateway; and
generating target resource requests by the gateway transmitted to the derived target resource URLs to provide services for the application of the client device.

In a possible embodiment of the method according to the present invention the method comprises the step of:
monitoring by the gateway of the cloud platform an operation performance of the target resources addressed by the derived target resource URLs during access of the target resources by the application to detect vulnerabilities and/or anomalies in the data access behaviour of the application.

In a possible embodiment of the method according to the second aspect of the present invention, the at least one target resource addressed by the derived target resource URL comprises an internal target resource forming part of the internal infrastructure of the cloud platform or an external target resource not forming part of the internal infrastructure of the cloud platform.

In a further possible embodiment of the method according to the second aspect of the present invention, the vulnerabilities and/or anomalies in the data access behaviour of the application are detected by a trained neural network of the cloud platform.

In a still further possible embodiment of the method according to the second aspect of the present invention, the application is automatically tested using test data provided by at least one target resource.

In a still further possible embodiment of the method according to the second aspect of the present invention, the tested and/or validated application is assigned by an identity and/or access, IAM, management unit of the cloud platform to one or more operators to provide a release version of the application stored in an application repository of the cloud platform.

In the following, possible embodiments of the different aspects of the present invention are explained in more detail with reference to the enclosed figures.
- FIG 1: shows a block diagram for illustrating schematically a cloud platform according to an aspect of the present invention;
- FIG 2: shows a diagram for illustrating the operation of a cloud platform according to the present invention;
- FIG 3: shows a flowchart of a possible exemplary embodiment of a method according to the present invention;
- FIG 4: shows a further flowchart for illustrating a process of artifact lifecycle management within a cloud platform according to the present invention.

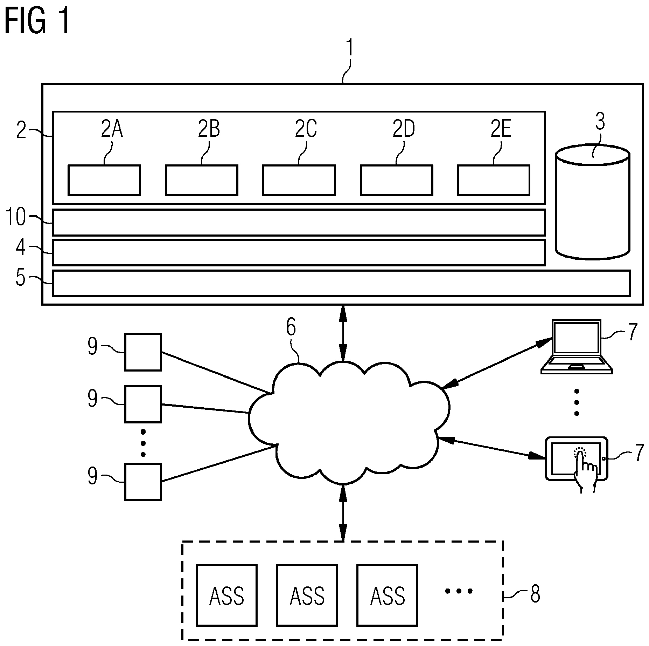

As illustrated in the schematic block diagram of FIG 1, a cloud platform 1 according to an aspect of the present invention can comprise an artifact lifecycle management module 2 including a development module 2A, a validation module 2B, a provider module 2C, a provisioning module 2D and a monitoring module 2E. Further, the cloud platform 1 can comprise an artifact repository 3. The cloud platform 1 can comprise additional cloud hardware, in particular a gateway 4 having a cloud connectivity interface 5 to connect the cloud platform 1 to a global wide area network 6 such as the Internet. A plurality of different client devices 7 can also be connected via the network 6 to the cloud platform 1 according to the present invention. Further, automation systems 8 with different assets ASS can be connected via the network 6 to the cloud platform 1. Further external resources 9 such as servers can be connected to the cloud platform via the network 6 as illustrated in FIG 1. In a possible embodiment the cloud platform 1 is an Internet of Things, IoT, cloud platform.

The development module 2A of the cloud platform 1 can provide access to an integrated development environment, e.g. via a graphical or console-based user interface. The integrated development environment can enable a developer to develop artifacts such as software applications, code snippets, digital twin models, APIs, event-based functionality, simulation models, engineering software, security applications, connectivity and configuration. In a possible implementation, the artifact development module 2A may comprise an artifact generation module, an artifact version manager, an artifact registration module as well as an artifact assignment module. The artifact generation module can create artifacts such as applications for development on the cloud platform 1. The artifact version manager allows to manage multiple versions with unique artifact identifiers. Further, the artifact registration module enables or disables specific artifact versions for testing and evaluation purposes. The artifact assignment module is adapted to manage assignments of artifacts for productive usage after validation.

In an exemplary operation, the artifact development module 2A can be configured to generate an artifact such as an binary code based on user inputs received through integrated development environment. The artifact development module 2A can be configured for testing the artifact on the cloud platform 1 using test scenarios. Test scenarios can be based on the type of the artifacts including test data from connectivity, e.g. assets, time series data, etc. The artifact development module 2A of the cloud platform 1 can be configured to provide results of the test to a user including recommendations about artifact operations, artifact optimizations and artifact security. Accordingly, the artifact development module 2A can be configured to modify an artifact based on the respective test results. The artifact development module 2A can be configured to manage multiple versions of an artifact which may in turn consist of multiple sub-artifacts. The artifact development module 2A is further configured to generate an identifier associated with the artifact which is sent for validation. The artifact development module 2A can be further adapted to generate a new version of an artifact based on a feedback on the operation behaviour of the artifact in a productive or automation system such as automation system 8 illustrated in FIG 1. Further, the artifact development module 2A of the cloud platform 1 can be configured to store a new version of the artifact in the artifact repository 3 of the cloud platform 1. The cloud platform 1 illustrated in FIG 1 can provide a cloud-based platform as a service (PaaS). The cloud platform 1 can collect and analyze all kinds of sensor data of an automation system 8 in real time. This information or data can be used to optimize products or production assets and manufacturing processes along an entire value chain. An open application interface API of the cloud platform 1 can make it possible to obtain data from machines, plants or entire factories irrespective of the manufacturer. The platform as a service (PaaS) allows the consumer to manage applications and data while the provider of the platform as a service (PaaS) does manage runtime, middleware, operation system, virtualization, servers, storage and networking.

The cloud platform 1 as illustrated in FIG 1 comprises an internal infrastructure including cloud hardware comprising a gateway 4. In the cloud platform 1 according to the present invention, the gateway 4 of the cloud platform 1 is configured as a reverse proxy to generate in response to a request received from an application of a client device 7 connected to the cloud platform 1 via the network 6 at least one target request transmitted or routed to a target resource URL of at least one target resource. The target resource URL is derived in a preferred embodiment automatically by the gateway 4 according to a configuration of the gateway. The configuration can comprise in a possible embodiment a configuration mapping between applications and internal or external target resources. A monitoring unit of the gateway 4 or a monitoring module 2E of the cloud platform 1 is adapted in a preferred embodiment to monitor the operation performance of the at least one target resource addressed by the derived target resource URL to detect automatically vulnerabilities and/or anomalies in a data access behaviour of the application. The runtime monitoring module 2E can in a possible embodiment monitor characteristics associated with an artifact or application during its runtime. These characteristics can include in a possible embodiment security characteristics, performance characteristics, etc. In a possible implementation, if real-time values or monitored characteristics are less than desired values, the operation of the artifact and/or application can be suspended temporarily and feedback may be provided to the artifact development module 2A and to the artifact provider module 2C of the cloud platform 1. Accordingly, the application development module 2A of the cloud platform 1 can perform in a possible embodiment corrective steps to fix reported issues concerning the respective artifact or application. The artifact provider module 2C of the cloud platform 1 can be adapted to deploy a new version of an artifact or application in a productive or industrial system. The artifact provisional module 2B can notify a tenant administrator that the artifact or application is ready for use.

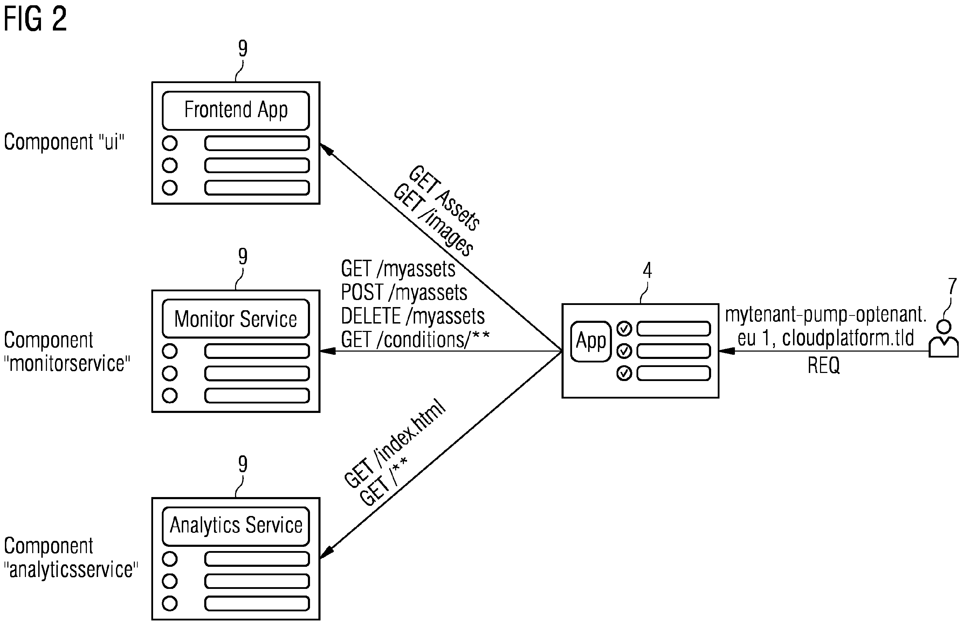

As illustrated in the schematic diagram of FIG 2, the gateway 4 can be provided between client devices 7 and Services provided e.g. by external servers 9. The gateway 4 of the cloud platform 1 according to the present invention acts as a reverse proxy which can route requests from client devices 3 to target resources within the internal or external infrastructure of the cloud platform 1. The gateway 4 can also perform various cross-cutting tasks such as authentication, SSL termination, security checks and can also provide additional configuration options. Without the provision of such a gateway 4, client devices would need to send every request directly to target resources. In the illustrated example of FIG 2, the client device 7 runs an application which submits via the network 6 a request to the gateway 4 of the cloud platform 1. From the received application request, the gateway 4 derives automatically target resource URLs according to its configuration data. The gateway 4 can generate automatically target requests applied to target resources addressed by the derived target URLs. The target resources can comprise as illustrated in FIG 2 a component UI, a monitoring service component and/or an analytics service component. On the cloud platform 1 according to the present invention, the target resources addressed by derived by target resource URL can comprise both an internal target resource URL and/or an external target resource URL. The internal target resource forms part of the internal infrastructure of the respective cloud platform 1. In contrast, an external target resource does not form part of the internal infrastructure of the cloud platform 1 but forms an infrastructure resource connected to the network 6 as illustrated in FIG 1. The external target resource can for instance comprise a server 9 providing backend services for applications run on client devices 7. The self-hosted application can interact with the application/API gateway and an identity and access management unit in a multi-tenancy environment. After an application has been integrated with these two subsystems, i.e. the gateway 4 and identity and access management unit 10, it can undergo transition as an artifact in the platform artifact lifecycle. In the cloud platform 1 according to the present invention, independent of the type of the artifact application users can access self-hosted systems from a central entry place, e.g. by using an entry page for login of the cloud platform 1. Users can use such an application in the same way as if they were running on the internal infrastructure of the cloud platform 1 even when the target resources are formed by external target resources such as the external servers 9 illustrated in FIG 1. The target resource URL of a target resource can comprise a network address of the target resource or a DNS name of the target resource. In a possible embodiment, the gateway 4 of the cloud platform 1 can comprise a security check unit adapted to perform a security check based on the source URL of the requesting client device 7 and/or form a security check based on the derived target resource URLs of target resources. In a possible embodiment, the monitoring module 2E of the artifact lifecycle management module can be used to monitor the operation performance of target resources addressed by the derived target resource URLs. In a further possible embodiment, the gateway 4 comprises a monitoring unit adapted to monitor the operation performance of each target resource addressed by a derived target resource URL to detect changes within the internal and/or external infrastructure. In a possible implementation, a trained neural network of the cloud platform 1 can be adapted to detect automatically vulnerabilities and/or anomalies during data access of the target resources by an application. In a possible embodiment, a continuous monitoring of the configured URL is performed to detect changes in the underlying infrastructure and to detect a potential vulnerability in the external system infrastructure that might impact customer data based on regular scans and by using artificial intelligence and/or machine learning to detect anomalies in the data access behaviour of an application.

An identity and/or access management, IAM, unit of the cloud platform 1 can be provided and is adapted to derive automatically access rights to target resources from the received request of the application. The target resources can comprise software resources or hardware resources. The software resources can comprise for instance backend services, websites or executable files. The hardware resources can comprise any kind of processing resources and/or storage resources used for storing data. In a possible embodiment, the gateway 4 of the cloud platform 1 can comprise a secure configuration storage which can store configuration data of the gateway 4. The configuration data can comprise mapping data for mapping self-hosted applications to one or more target resources. The mapping data can be stored in a look-up table (LUT). In a possible embodiment, a self-hosted application of a client device 7 can be automatically tested in response to a request using test data provided by an internal or by an external target resource. The successfully tested application can be stored along with application metadata in the application repository 3 of the cloud platform 1 for use by multiple end customers of the cloud platform 1. If during access to the target resources addressed by the derived target resource URLs derived by the gateway 4 from a name or from other application metadata of the respective application the vulnerability and/or an anomaly in the current operation behaviour is detected by the monitoring unit of the gateway 4 and/or by the monitoring module 2E, a warning message can be issued and an access of the application to its associated target resources can be terminated automatically by the gateway 4 of the cloud platform 1.

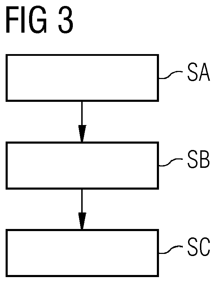

In a possible embodiment, a method for integration and secure operation of self-hosted applications of client devices by use of a cloud platform 1 according to a further aspect of the present invention is illustrated in FIG 3.

In the illustrated exemplary embodiment, the method comprises several main steps. In a first step SA, the gateway 4 of the cloud platform 1 can derive in response to a request received from an application of a client device 7 connected with the cloud platform 1 one or more target resource URLs of target resources according to a configuration of the gateway 4. The target resources can comprise internal target resources and external target resources.

In a further step SB, the gateway 4 generates target resource requests routed or transmitted to derived target resource URLs to provide services for the application of the client device.

In a possible embodiment, the gateway 4 of the cloud platform 1 monitors in a further step SC the operation performance of the target resources addressed by the derived target resource URLs during access of the target resources by the application to detect automatically vulnerabilities and/or anomalies in the data access behaviour of the application. In a possible implementation, the vulnerabilities and/or anomalies in the data access behaviour of the application can be detected by a trained artificial neural network ANN of the cloud platform 1. The trained artificial neural network ANN can be implemented in the gateway 4 of the cloud platform 1.

As illustrated in the block diagram of FIG 1, the cloud platform 1 can comprise an artifact validation module 2B. The artifact validation module 2B can be configured to perform validation checks on artifacts and/or applications to identify issues with the artifacts before deploying the artifacts in a cloud system. In a possible embodiment, the artifact validation module 2B can comprise an artifact detection unit, an artifact validator, a reporting unit as well as a feedback unit. When an artifact developer uploads an artifact package to the artifact repository 3 of the cloud platform 1, the artifact detection unit can be configured to automatically determine that a new artifact has been added to the artifact repository 3. The artifact validator can be configured to perform pre-checks on the artifact. Pre-checks can be performed on the artifact in order to identify obvious defects in artifacts. For example, the artifact validator may perform a virus and malicious code scan on the artifact (application), check icon of artifact for compliance, determine adherence of artifacts to standards and/or perform a syntax and/or semantics check. If the pre-check is not successful, then the feedback unit of the artifact validation module 2B can be configured to notify the results of the pre-check to the artifact developer. Additionally, the feedback module or feedback unit of the artifact validation module 2B can provide some recommendations to fix the defects in the respective artifact or application. Accordingly, the artifact validation module 2B can be configured to automatically perform corrections in the artifact according to recommendations.

In a possible embodiment, if the artifact (e.g. application) passes the pre-check, the artifact validator of the artifact validation module 2B is configured to perform a static screening of the artifact. For example, the artifact validator performs dependency checks, insecure credential analysis, indicator carving analysis, application asset carving and clearing. In a possible embodiment, the artifact validator of the artifact validation module 2B can crawl for dependencies between artifact elements and identify vulnerabilities in the dependencies. In a possible implementation, the artifact validator of the artifact validation module 2B can crawl for hardcoded or certificates from non-trusted certificate authorities, private keys, user names, passwords, etc. and may identify insecure credentials associated with the artifact. The artifact validator of the artifact validation module 2B can further crawl for hardcoded URLs, IP addresses, domains and can check against threat intelligence database. The artifact validator of the artifact validation module 2B further can crawl for embedded files such as images, stylesheets, scripts and/or documents and can check against anti-virus engines and threat intelligence database. If the artifact or application fails the static screening, the artifact generation module can be configured to automatically perform corrections in the artifact according to predefined instructions. In contrast, if the artifact passes the static screening, the artifact validator of the artifact validation module 2B is configured to perform a dynamic screening on the artifact. In a possible embodiment, the artifact validator is configured to test the behaviour of the artifacts in runtime environment by executing the artifact or application in a sandbox environment. In this embodiment, the artifact validator of the artifact validation module 2B can be configured to determine whether the artifact behaviour is acceptable when deployed on the cloud platform 1. For example, the artifact validator of the artifact validation module 2B can check on OWASP web-application vulnerabilities, data exfiltration, insecure data storage, API conformance, robustness, performance user interface experience, deployment issues, etc. If the artifact or application fails the dynamic screening, then the artifact generation module is configured to automatically perform corrections in the artifact or application according to predefined instructions. In some cases, the dynamic screening and the static screening can be performed by the cloud platform 1 in parallel.

Finally, if the application also passes the dynamic screening, the artifact validator of the artifact validation module 2B can be configured to update the results in the artifact repository 3, can sign the artifact, i.e. application, and store the signed artifact in the artifact repository 3 along with signature information. For example, the artifact validator can be configured to sign the artifact with a Global Unique Identifier. In a possible embodiment, the artifact can be signed using a checksum or certificate. The reporting module of the artifact validation module 2B can notify the developer that the artifact has been validated successfully. Accordingly, the artifact development module 2A is configured to assign the validated artifact to a particular provider. Alternatively, the provider can send a request for assigning the artifact. Consequently, the artifact validation module 2B automatically assigns the signed artifact to the provider.

The feedback module of the artifact validation module 2B can be configured to provide feedback to the developer if the artifact fails one of the static, dynamic and/or runtime tests. The developer can modify the artifact based on the feedback from the artifact validation module 2B. The validation process helps to maintain quality of artifacts to an acceptable standard before deployment in a product environment of the cloud platform.

The artifact provider module 2C of the cloud platform 1 is configured to deploy the artifact on the cloud platform 1. The artifact provider module 2C may receive the validated artifacts from the artifact validation module 2B, verify whether the artifact is validated by the cloud platform 1 using valid signature and can deploy the artifact in a productive system connected to the cloud platform 1 and can assign the artifact to users of the cloud platform 1. The user of the artifact provider module 2C can be provided with a graphical user interface GUI to monitor and to manage the artifacts, in particular applications, provided to the users of the cloud platform 1. The artifact provider module 2C enables the provider to delete and/or to upload new versions of the artifact or application.

The artifact provider module 2C of the cloud platform 1 can receive a notification indicating that the application is available in the artifact repository 3. Alternatively, the artifact provider module 2C may search for an artifact in the artifact repository 3 using an artifact identifier input by the provider. The artifact provider module 2C is further configured to download a set of files associated with the validated artifact from the artifact repository 3. For example, if the artifact is a software application, then the set of files may include binaries and manifest file (e.g. Java file, Json file, script file in python language). The artifact provider module 2C is also configured in a possible embodiment to provide corresponding APIs and/or additional services (e.g. database services) needed for deployment of the artifact on a productive or automation system such as automation system 8 shown in FIG 1. The artifact can be signed with a signature, i.e. a Global Unique Identifier. The artifact can be signed using a checksum or a certificate. For example, a hash key can be generated using SHA-256 for artifact files. The hash key can be stored in the artifact repository 3 together with the artifact.

The artifact provisioning module 2D of the cloud platform 1 can be configured to assign the artifact to a tenant administrator so that the tenant administrator can provide access to respective sub-tenants, devices and agents in an environment. In a possible embodiment, the artifact provisioning module 2D of the cloud platform 1 is configured to create a setup route between the cloud platform 1 and a user of the cloud platform 1 for providing access to the artifact. For example, the access can be provided based on a request of the tenant administrator. In an example, the tenant administrator may search for a deployed artifact in the artifact repository 3. Based on a search query, the artifact provisioning module 2D may search the artifact and display the same on the graphical user interface. Further, the tenant administrator may request to assign the artifact deployed in the productive system. The artifact provisioning module 2D of the cloud platform 1 can assign the artifact or application to a tenant administrator.

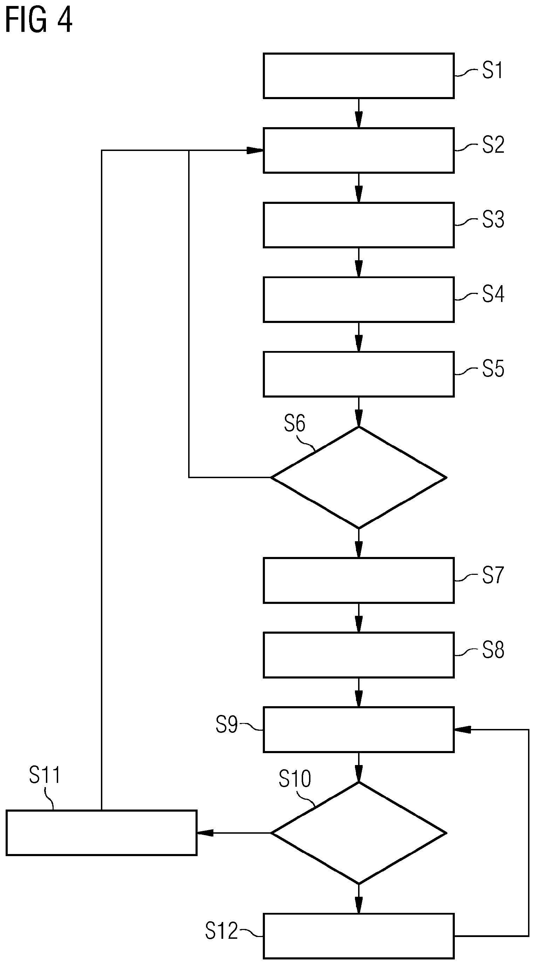

FIG 4 shows a flowchart of a possible exemplary embodiment of a process of an artifact lifecycle management performed by the cloud platform 1 according to the present invention.

In a first step S1, an integrated development environment is provided on the cloud platform 1.

In a further step S2, an artifact or an application can be developed based on user inputs from an integrated development environment.

In a further step S3, the developed artifact, i.e. application, is tested in the integrated development environment using different test scenarios.

The tested artifact can be stored in the artifact repository 3 in step S4.

A validation of the artifact can be performed in step S5.

In step S6, it is tested whether the validation has been performed successfully or not. If the validation was not successful, the process returns to step S2 as illustrated in FIG 4. In contrast, if the validation of the artifact was performed successfully, the artifact (application) is deployed in step S7 in the productive environment. The provision of the artifact to the tenants of the cloud platform can take place in step S8.

In step S9, the runtime behaviour of the application deployed on the cloud platform 1 is monitored. In a possible embodiment, the monitoring unit implemented in the gateway 4 or in the monitoring module 2E of the platform can be used to monitor an operation performance of target resources addressed by the derived target resource URLs during access of the target resources by the application or artifact to detect vulnerabilities and/or anomalies in the data access behaviour of the respective application.

In a possible embodiment, in step S10, it is checked whether the runtime behaviour of the artifact or application was normal or not. If the runtime behaviour of the application or artifact was found to be not normal, the execution of the artifact in the cloud platform 1 can be suspended in step S11. Further, a corresponding feedback to the developer can be provided. In contrast, if the runtime behaviour of the monitored artifact or application is normal, the execution of the artifact in the cloud platform 1 can be continued in step S12 as illustrated in FIG 4.

To secure the overall cloud platform 1 during the application configuration, certain security checks can be performed to avoid malicious entries. Also, while the application is within the cloud platform 1, a continuous monitoring is executed. The continuous monitoring can comprise checks of SSL certificates, automated penetration tests and changes of the configured DNS names and underlying IP ranges of the external infrastructure.

The cloud platform 1 according to the present invention provides a common process for managing various self-hosted applications in the cloud platform 1 which results in an efficient way for integrating new and legacy applications in a stepwise approach. Further, the cloud platform 1 according to the present invention provides the ability to configure arbitrary external URLs as part of the application/artifact configuration in a secure manner so that they can execute data processing on multi-tenancy data and sold via a store to multiple customers in form of a software as a service model.

The cloud platform 1 according to the present invention provides an easy and fast integration of applications in an cloud platform 1. In a possible implementation, the cloud platform 1 can comprise a MindSphere cloud platform.

The artifacts can comprise self-hosting applications. Self-hosting is the use of a computer program or application as part of a tool chain or operating system which may produce new versions of the same computer program or application. Self-hosting is the process of locally hosting or managing applications instead of renting them from e.g. SaaS providers. The applications run on the client devices 7 can comprise applications which are adapted to analyze data from a plurality of data sources or data points. For instance, applications can be used for providing benchmarking. In a still further possible embodiment, the applications can also comprise control applications used for controlling assets ASS of an industrial facility such as machines in a production facility. In this embodiment, the applications run on the external or internal infrastructure of the cloud platform 1 can generate control signals output by the cloud platform 1 via the gateway 4 and the network 6 to the automation system 8 for controlling assets ASS or machines M within the automation system 8. Monitoring the operation performance, in particular I/O performance such as latency, of such control applications is of utmost importance. The operation performance of any target resource addressed by a target resource URL that has been derived from the received request of the application by the gateway 4 according to its configuration data should be continuously monitored to detect immediately any kinds of vulnerabilities and/or anomalies in the data access behaviour of such a control application. Operation performance has to be monitored during runtime and a warning and/or termination of the application has to be performed immediately if a vulnerability and/or an anomaly has been detected by a monitoring unit of the gateway 4 or by the monitoring module 2E. The detection of suspicious operation behaviour can in a possible implementation be accomplished by a trained artificial neural network ANN having one or more hidden layers.

## Claims

1. A cloud platform (1) having an internal infrastructure including a gateway (4) configured as a reverse proxy to generate in response to a request (REQ) received from an application of a client device (7) connected to said cloud platform (1) at least one target request transmitted to a target resource URL of at least one target resource (9),
wherein the target resource URL is derived automatically by the gateway (4) according to a configuration of the gateway (4).

2. The cloud platform according to claim 1, wherein an operation performance of the at least one target resource (9) addressed by the derived target resource URL is monitored during access of the target resource (9) by the application to detect vulnerabilities and/or anomalies in a data access behaviour of the application.

3. The cloud platform according to claim 1 or 2, an internal target resource forming part of the internal infrastructure of the cloud platform and/or an external target resource not forming part of the internal infrastructure of the cloud platform are addressable by way of the derived target resource URL.

4. The cloud platform according any of the preceding claims 1 to 3, wherein the target resource URL of a target resource (9) comprises a network address of the target resource or a DNS name of the target resource.

5. The cloud platform according to any of the preceding claims 1 to 4 wherein the gateway (4) comprises a security check unit adapted to perform a security check based on a source URL of the requesting client device (7) and/or a security check based on the derived target resource URLs of target resources (9).

6. The cloud platform according to any of the preceding claims 1 to 5 wherein the gateway (4) comprises a monitoring unit adapted to monitor the operation performance of each target resource (9) addressed by a derived target resource URL to detect changes within the internal and/or external infrastructure.

7. The cloud platform according to any of the preceding claims 1 to 6 wherein a trained neural network of the cloud platform (1) is adapted to detect vulnerabilities and/or anomalies during data access of the target resources (9) by an application.

8. The cloud platform according to any of the preceding claims 1 to 7 wherein an identity and/or access management, IAM, unit (10) of the platform (1) is adapted to derive access rights to target resources (9) from the received request of the application.

9. The cloud platform according to any of the preceding claims 1 to 8 wherein the target resources (9) comprise software resources, in particular backend services, websites and files, and/or hardware resources, in particular processing resources and storage resources.

10. The cloud platform according to any of the preceding claims 1 to 9 wherein the configuration stored in a secure configuration storage of the gateway (4) comprises a mapping between self-hosted applications of requesting client devices (7) and one or more associated target resources (9).

11. The cloud platform according to any of the preceding claims 1 to 10 wherein a self-hosted application of a client device (7) is automatically tested in response to a request using test data provided by an internal or external target resource.

12. The cloud platform according to claim 11 wherein the successfully tested application is stored along with application metadata in an application repository (3) of the cloud platform (1) for use by multiple end customers of the cloud platform (1).

13. The cloud platform according to any of the preceding claims 1 to 12 wherein if during access of target resources (9) addressed by target resource URLs derived by the gateway (4) from a name or from another application metadata of the respective application a vulnerability and/or an anomaly of the current operation behaviour is detected by the monitoring unit of the gateway (4), a warning is issued and/or an access of the application to its associated target resources (9) is terminated automatically by the gateway (4).

14. A method for integration and secure operation of self-hosted applications of client devices by use of a cloud platform (1) comprising the steps of:
- deriving (SA) by a gateway (4) of the cloud platform (1) in response to a request (REQ) received from an application of a client device (7) connected with the cloud platform (1) one or more target resource URLs of target resources (9) according to a configuration of the gateway (4); and
- generating (SB) target resource requests by the gateway (4) transmitted to the derived target resource URLs to provide services for the application of the client device (7).

15. The method according to claim 14, comprising the step of:
monitoring (SC) by the gateway (4) an operation performance of the target resources (9) addressed by the derived target resource URLs during access of the target resources (9) by the application to detect vulnerabilities and/or anomalies in the data access behaviour of the application.

16. The method according to claim 14 or 15 wherein the at least one target resource (9) addressed by the derived target resource URL comprises an internal target resource forming part of the internal infrastructure of the cloud platform (1) or an external target resource not forming part of the internal infrastructure of the cloud platform (1).

17. The method according to any of the preceding claims 14 to 16 wherein the vulnerabilities and/or anomalies in the data access behaviour of the application are detected by a trained neural network of the cloud platform (1).

18. The method according to any of the preceding claims 14 to 17 wherein the application is automatically tested using test data provided by at least one target resource (9).

19. The method according to claim 18 wherein the tested and/or validated application is assigned by an identity and/or access, IAM, management unit (10) to one or more operators to provide a release version of the application stored in an application repository (3) of the cloud platform (1).
